# EUROPÄISCHE PATENTSCHRIFT

(11) **EP 1 544 011 B1**
(45) Veröffentlichungstag und Bekanntmachung des Hinweises auf die Patenterteilung: **30.12.2015**
(21) Anmeldenummer: 04027261.9
(22) Anmeldetag: 17.11.2004
(51) Int. Cl.: B60J 5/04

(54) **Fahrzeugtür mit einer Versteifungsstrebe**
Vehicle door with a stiffening bar
Porte pour véhicule avec une barre de renfort

(30) Priorität: 18.12.2003 DE 10359655
(43) Veröffentlichungstag der Anmeldung: 22.06.2005
(73) Patentinhaber: Bayerische Motoren Werke Aktiengesellschaft, 80809 München (DE)
(72) Erfinder: Leingärtner, Richard, 93194 Walderbach (DE); Haas, Günther, 81739 München (DE)

(56) Entgegenhaltungen:
- EP-A- 0 989 007
- DE-A1- 3 642 429
- DE-A1- 10 223 355
- DE-U1- 29 613 472
- FR-A- 2 198 852
- GB-A- 1 116 359
- US-A1- 2003 168 902
- US-B1- 6 205 714
- US-B1- 6 212 851

## Beschreibung

Die Erfindung betrifft eine Fahrzeugtür mit einer Versteifungsstrebe, mit den im Oberbegriff des Patentanspruches 1 angegebenen Merkmalen.

Eine solche Fahrzeugtür ist aus US 6205714 B1 bekannt. Andere derartige Fahrzeugtür ist in der DE 42 21 466 A1 durch eine Versteifungsstrebe verstärkt, die zwischen diagonal gegenüber liegenden Eckbereichen der Fahrzeugtür nach vorne oben oder nach hinten oben geneigt angeordnet ist. Die nach außen konvex gekrümmte Versteifungsstrebe ist mit einem Endbereich entweder am oberen oder unteren Ende einer hinteren Stirnseite der Fahrzeugtür befestigt, an der ein Türschloss angeordnet ist. Die Versteifungsstrebe dürfte bei einem unfallbedingten Aufprall beispielsweise eines anderen Fahrzeugs einen benachbarten Fahrzeuginsassen und/oder Gepäckstücke vor einer Verletzung oder Beschädigung schützen. Von der Versteifungsstrebe dürfte jedoch nicht zu verhindern sein, dass sich bei dem unfallbedingten Aufprall die Fahrzeugtür im Bereich des Türschlosses oder zusätzlich im Bereich des äußeren Türgriffes derart verformt, dass das Türschloss selbsttätig geöffnet wird.

Der Erfindung liegt die Aufgabe zu Grunde, eine Fahrzeugtür mit den Merkmalen im Oberbegriff des Patentanspruches 1 anzugeben, bei der ein selbsttätiges öffnen des Türschlosses bei einem unfallbedingten Aufprall beispielsweise durch ein anderes Fahrzeug erschwert oder verhindert ist.

Diese Aufgabe ist durch die im Patentanspruch 1 angegebenen Merkmale gelöst. Vorteilhafte Ausgestaltungen der Erfindung sind den Unteransprüchen entnehmbar. Durch die Befestigung der Endbereiche der Versteifungsstrebe einerseits im vertikal mittleren Bereich der Stirnwand und andererseits im mittleren Längsbereich der Fensterbrüstung jeweils an der Fahrzeugtür schützt die Versteifungsstrebe bei einem unfallbedingten Aufprall das Türschloss und die zum Türschloss führenden Übertragungselemente. Bei einem vorzugsweise nah am Türschloss angeordneten äußeren Türgriff sind auch der Türgriff und die vom Türgriff zum Türschloss führenden Übertragungselemente von der Versteifungsstrebe vor einer übermäßigen Verformung geschützt, wodurch in diesen Fällen bei dem unfallbedingten Aufprall beispielsweise eines anderen Fahrzeugs auf die Fahrzeugtür ein Öffnen des Türschlosses erschwert oder verhindert ist. Bei dem unfallbedingten Aufprall nimmt die Versteifungsstrebe Energie auf und verformt sich dabei elastisch und eventuell plastisch, wodurch auf das Türschloss, die Übertragungselemente und den Türgriff sowie auf die Fahrzeuginsassen und das im Fahrzeug mitgeführte Gepäck geringere Beschleunigungskräfte einwirken.

Ein Ausführungsbeispiel der Erfindung wird an Hand einer Zeichnung näher erläutert. Es zeigen
- Fig. 1: eine vereinfachte Seitenansicht auf eine hintere seitliche Fahrzeugtür eines Kraftfahrzeugs,
- Fig. 2: eine vergrößerte vereinfachte Ansicht von der Versteifungsstrebe und ihrer Befestigung an der Fensterbrüstung und
- Fig. 3: einen Querschnitt durch die Fahrzeugtür in Figur 1.

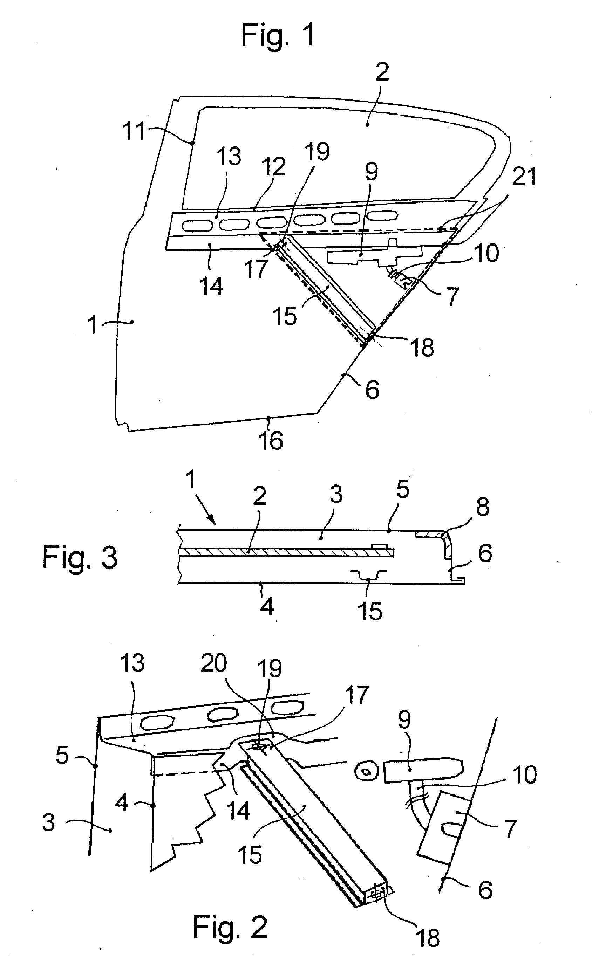

Die in Figur 1 dargestellte Fahrzeugtür 1 ist eine hintere linke Fondtür eines Kraftfahrzeugs, die in einer Seitenansicht von außen her vereinfacht dargestellt ist. Die Fahrzeugtür 1 weist eine höhenverstellbare Fensterscheibe 2 auf, die in ihrer angehobenen Schließlage dargestellt ist, in der die Fensterscheibe 2 eine obere Fensteröffnung 11 in der Fahrzeugtür 1 verschließt.

Die Fensterscheibe 2 kann in einen Türinnenraum 3 abgesenkt werden, der in dem in Figur 3 dargestellten Querschnitt durch die Fahrzeugtür 1 erkennbar ist. Die Fahrzeugtür 1 weist eine Türaußenwand 4 und eine Türinnenwand 5 auf, die vorne über eine nicht dargestellte Querwand und hinten über eine Stirnwand 6 verbunden sind, an der ein Türschloss 7 befestigt ist. Von dem Türschloss 7 ist in Figur 3 lediglich ein winkelförmiges, in einem Eckbereich mit der Türinnenwand 5 und der Stirnwand 6 verbundenes Schlossblech 8 dargestellt.

Wie in Figur 1 angedeutet, ist an der Türaußenwand 4 in der näheren Umgebung des Türschlosses 7 ein Türgriff 9 schwenkbar befestigt, der über vereinfacht dargestellte Übertragungselemente 10 mit einer Sperrklinke des Türschlosses 7 in Verbindung steht und bei einer Schwenk- oder Ziehbewegung die Sperrklinke von einer Drehfalle weg anhebt und dadurch das Türschloss 7 öffnet.

In den Figuren 1 und 2 ist erkennbar, dass die den unteren Rand der Fensteröffnung 11 bildende Fensterbrüstung 12 durch einen etwa horizontal angeordneten Verstärkungsträger 13 verstärkt ist, der in dem Türinnenraum 3 einen etwa vertikalen Wandbereich 14 aufweist. Zwischen der Türaußenwand 4 und der abgesenkten Fensterscheibe 2 ist in dem Türinnenraum 3 eine im wesentlichen gerade verlaufende Versteifungsstrebe 15 angeordnet, die nah an dem Türaußengriff 9 und dem Türschloss 7 angeordnet schräg zwischen einem vertikal mittleren Bereich der Stirnwand 6 und einem mittleren Längsbereich der durch den Verstärkungsträger 13 verstärkten Fensterbrüstung 12 verläuft. Die hintere Stirnwand 6 erstreckt sich etwa von der Fensterbrüstung 12 schräg nach vorne unten zu der Unterseite 16 der Fahrzeugtür.

Die Versteifungsstrebe 15 ist beispielsweise ein Kantprofil, das durch seitliches Abkanten eines ebenen Blechstreifens einen U-förmigen Querschnitt mit von den Schenkelenden seitlich abstehenden Stegflächen aufweist. Die Versteifungsstrebe 15 bildet dadurch nahezu über ihre gesamte Länge einen zum Fahrgastraum offenen Querschnitt. Die Versteifungsstrebe 15 weist an ihren stirnseitigen Endbereichen in Längsrichtung abstehende Laschen 17, 18 auf, von denen die der Stirnwand 6 zugewandte Lasche 18 senkrecht zur Längsrichtung der Versteifungsstrebe 15 abgewinkelt ist. Die Lasche 17 ist beispielsweise über eine Mutter-/Schraubenverbindung an einer Befestigungsöffnung 19 mit dem vertikalen Wandbereich 14 des Verstärkungsträgers 13 verbunden. Der vertikale Wandbereich 14 weist im Bereich der Befestigung der Versteifungsstrebe 15 an dem Verstärkungsträger 13 eine Mulde 20 auf, die so tief ausgebildet ist, dass sie die Lasche 17 und ein vorstehendes Teil der Mutter-/Schraubenverbindung vollständig aufnimmt.

Die der Stirnwand 6 zugewandte Lasche 18 der Versteifungsstrebe 15 ist über eine Mutter-/Schraubenverbindung an der Stirnwand 6 befestigt. In Figur 2 ist gegenüber Fig. 1 weniger deutlich erkennbar, dass die Lasche 18 und die Stirnwand 6 im Bereich der Befestigungsstelle parallel verlaufen und nach der Montage der Versteifungsstrebe 15 aneinander anliegen.

Wie in Figur 1 zu erkennen ist, sind das Türschloss 7 und der Türgriff 9 in einer Ansicht auf die Fahrzeugtür 1 in einem etwa dreieckförmigen Bereich angeordnet, der durch eine unterbrochene Umrisslinie 21 gekennzeichnet ist. Dieser Bereich ist oben von der Fensterbrüstung 12, vorne von der nach hinten unten geneigten Versteifungsstrebe 15 und hinten von der gerade oder gekrümmt oder mit einem Knick nach vorne unten verlaufenden Stirnwand 6 der Fahrzeugtür 1 begrenzt.

Die Versteifungsstrebe 15 nimmt bei einem unfallbedingten Seitenaufprall beispielsweise eines anderen Fahrzeugs auf die Fahrzeugtür 1 elastisch und/oder plastisch Energie auf und verhindert dadurch größere Verformungen und/oder Beschleunigungen der Fahrzeugtür 1 insbesondere in dem durch die Umrisslinie 21 gekennzeichneten Bereich, in dem der äußere Türgriff 9, die Übertragungsteile 10 und das Türschloss 7 angeordnet sind. Dadurch wird verhindert, dass die unfallbedingten Verformungen und/oder Beschleunigungen der Fahrzeugtür 1 oder damit verbundener Teile den äußeren Türgriff 9 oder das Türschloss 7 oder die zwischen dem Türgriff 9 und dem Türschloss 7 angeordneten Übertragungselemente 10 derart verstellen können, dass das Türschloss 7 und damit die Fahrzeugtür 1 unbeabsichtigt geöffnet werden.

Nachdem die Versteifungsstrebe 15 ein Öffnen des Türschlosses 7 und damit der Fahrzeugtür 1 verhindert, können bei dem unfallbedingten Aufprall Personen und/oder Gepäckstücke nicht aus dem Fahrgastraum fallen und sind somit besser geschützt.

Die Versteifungsstrebe kann auf beliebige Weise direkt mit der Fensterbrüstung oder einem anders gebildeten Verstärkungsträger der Fensterbrüstung lösbar oder unlösbar verbunden sein. Die bei dem Ausführungsbeispiel vorgesehenen Laschen der Versteifungsstrebe können auch unlösbar an dem betreffenden Teil der Fahrzeugtür befestigt sein. Die Versteifungsstrebe kann nach ihrer Montage keinen oder einen geringen Abstand zur Innenseite der Tür Außenwand aufweisen. Der Querschnitt der Versteifungsstrebe ist an sich beliebig vorzugeben. Beispielsweise ist die Versteifungsstrebe durch ein Rohr mit einem beliebigen Querschnitt oder durch wenigstens ein Tiefziehteil und/oder wenigstens ein Kantprofil gebildet. Vorzugsweise ist die Versteifungsstrebe in Längsrichtung gerade ausgebildet. Ebenso kann die Versteifungsstrebe gekrümmt verlaufen oder Knickstellen aufweisen. Durch die Form der Versteifungsstrebe kann eine erwartete Verformung der Fahrzeugtür durch eine erwartete Gegenverformung ausgeglichen werden, um ein Öffnen des in dem angegebenen Bereich angeordneten Türschlosses zu verhindern. Der Türgriff kann auch außerhalb des von der Versteifungsstrebe geschützten Bereiches angeordnet sein, wenn zusätzliche Maßnahmen getroffen sind, die ein unfallbedingtes Verschwenken des äußeren Türgriffes in eine das Türschloss öffnende Öffnungslage verhindern. Die mit dem Türschloss versehene Stirnwand kann eine vordere oder hintere Stirnwand der Fahrzeugtür sein, die einen beliebigen ebenen oder gekrümmten oder Knickstellen enthaltenden schrägen oder vertikalen Verlauf aufweisen kann.

## Patentansprüche

1. Fahrzeugtür mit einer Versteifungsstrebe (15), die zwischen einer Türaußenwand (4) und einer abgesenkten Fensterscheibe (2) in einem Türinnenraum (3) schräg zwischen einer Fensterbrüstung (12) und einer Stirnwand (6), die ein Türschloss (7) aufweist, angeordnet und an ihren Endbereichen an der Fahrzeugtür (1) befestigt ist, und das Türschloss (7) über einen an der Türaußenwand (4) verstellbar angeordneten Türgriff und Übertragungselemente (10) zu öffnen ist, wobei ein Endbereich (18) der Versteifungsstrebe (15) im vertikal mittleren Bereich der Stirnwand (6) befestigt ist, die sich von der Fensterbrüstung (12) bis zur Unterseite (16) der Fahrzeugtür (1) erstreckt, **dadurch gekennzeichnet, dass** der andere Endbereich (17) der Versteifungsstrebe (15) im mittleren Längsbereich der Fensterbrüstung (12) befestigt ist.

2. Fahrzeugtür nach Anspruch 1, **dadurch gekennzeichnet, dass** die Fensterbrüstung (12) durch einen etwa horizontal angeordneten und mit der Fahrzeugtür (1) verbundenen Verstärkungsträger (13) verstärkt ist, der in dem Türinnenraum (3) einen Wandbereich (14) aufweist, an dem der zur Fensterbrüstung (12) gerichtete Endbereich der Versteifungsstrebe (15) befestigt ist.

3. Fahrzeugtür nach Anspruch 1 oder 2, **dadurch gekennzeichnet, dass** die Endbereiche der Versteifungsstrebe durch in Längsrichtung abstehende Laschen (17, 18) gebildet sind, die lösbar oder unlösbar an der Fahrzeugtür (1) und/oder gegebenenfalls an dem Verstärkungsträger (13) befestigt sind.

4. Fahrzeugtür nach einem der Ansprüche 1 bis 3, **dadurch gekennzeichnet, dass** der zur Stirnwand (6) gerichtete Endbereich der Versteifungsstrebe (15) durch eine etwa senkrecht zur Längsrichtung der Versteifungsstrebe (15) abgewinkelte Lasche (18) gebildet ist, die lösbar oder unlösbar mit der Innenseite der Stirnwand (6) verbunden ist.

5. Fahrzeugtür nach einem der Ansprüche 1 bis 4, **dadurch gekennzeichnet, dass** Versteifungsstrebe (15) keinen oder einen geringen Abstand zur Innenseite der Türaußenwand (4) aufweist.

6. Fahrzeugtür nach einem der Ansprüche 1 bis 5, **dadurch gekennzeichnet, dass** die Versteifungsstrebe (15) zumindest in einem größeren Längsbereich einen offenen oder geschlossenen Querschnitt bildet.

7. Fahrzeugtür nach einem der Ansprüche 1 bis 6, **dadurch gekennzeichnet, dass** die Versteifungsstrebe (15) durch wenigstens ein Rohr mit beliebigem Querschnitt oder durch wenigstens ein Tiefziehteil und/oder wenigstens ein Kantprofil gebildet ist.

8. Fahrzeugtür nach einem der Ansprüche 1 bis 7, **dadurch gekennzeichnet, dass** der Türgriff (9) in der näheren Umgebung des Türschlosses (7) angeordnet ist.

9. Fahrzeugtür nach einem der Ansprüche 1 bis 8, **dadurch gekennzeichnet, dass** die Versteifungsstrebe (15) in der näheren Umgebung des Türgriffes (9) und/oder des Türschlosses (7) angeordnet ist.

10. Fahrzeugtür nach Anspruch 8 und 9, **dadurch gekennzeichnet, dass** das Türschloss (7) oder zusätzlich der Türgriff (9) in einer Ansicht auf die Fahrzeugtür (1) in einem etwa dreieckförmigen Bereich (21) angeordnet ist bzw. sind, der oben von der Fensterbrüstung (12), vorne oder hinten von einer vertikalen oder nach vorne oder hinten unten geneigten Versteifungsstrebe (15) und hinten oder vorne von einer vertikalen oder gerade oder gekrümmt oder mit einem Knick nach vorne oder hinten unten verlaufenden Stirnwand der Fahrzeugtür (1) begrenzt ist.

## Claims

1. A vehicle door comprising a reinforcing strut (15) disposed between a door outer wall (4) and a lowered window pane (2) in a door interior (3) at an angle between a window parapet (12) and an end wall (6) containing a door lock (7), and fastened at its end regions to the vehicle door (1), and the door lock (7) is opened via a door handle and transmission elements (10) adjustably disposed on the end wall (4), wherein an end region (18) of the reinforcing strut (15) is fastened to the vertically central region of the end wall (6) extending from the window parapet (12) to the underside (16) of the door (1), **characterised in that** the other end region (17) of the reinforcing strut (15) is fastened to the central longitudinal region of the window parapet (12).

2. A vehicle door according to claim 1, **characterised in that** the window parapet (12) is reinforced by an approximately horizontal bearer (13) connected to the door (1) and containing a wall region (14) in the door interior (3) fastened to the end region of the reinforcing strut (15) extending towards the window parapet (12).

3. A vehicle door according to claim 1 or claim 2, **characterised in that** the end regions of the reinforcing strut are in the form of longitudinally projecting clips (17, 18) releasably or non-releasably fastened to the vehicle door (1) and/or to the bearer (13) if required.

4. A vehicle door according to any of claims 1 to 3, **characterised in that** the end region of the reinforcing strut (15) extending towards the end wall (6) is in the form of a clip (18) bent approximately at right angles to the longitudinal direction of the reinforcing strut (15) and releasably or non-releasably connected to the inside of the end wall (6).

5. A vehicle door according to any of claims 1 to 4, **characterised in that** the reinforcing strut (15) is at little or no distance from the inside of the door outer wall (4).

6. A vehicle door according to any of claims 1, **characterised in that** the reinforcing strut (15) has an open or closed cross-section, at least in a fairly large longitudinal region

7. A vehicle door according to any of claims 1 to 6, **characterised in that** the reinforcing strut (15) is in the form of at least one tube having any desired cross-section or at least one deep-drawn part.

8. A vehicle door according to any of claims 1 to 7, **characterised in that** the door handle (9) is disposed near the door lock (7).

9. A vehicle door according to any of claims 1 to 8, **characterised in that** the reinforcing strut (15) is disposed near the door handle (9) and/or the door lock (7).

10. A vehicle door according to claim 8 or claim 9, **characterised in that** the door lock (7) or additionally the door handle (9), looking towards the vehicle door (1), is disposed in an approximately triangular region (21) bounded above by the window parapet (12), at front or back by a vertical or forwardly or backwardly down-sloping reinforcing strut (15) and is bounded at back or front by a vertical or straight or bent or kinked end wall of the vehicle door (1), extending backward or forward underneath.

## Revendications

1. Portière de véhicule comportant une entretoise de rigidification (15) installée entre la paroi extérieure (4) de la portière et la vitre abaissée (2) dans le volume intérieur (3) de la portière, en biais entre l'appui de fenêtre (12) et le côté frontal (6), équipée d'une serrure de portière (7) et dont les zones d'extrémité sont fixées à la portière (1), la serrure (7) s'ouvrant à l'aide d'une poignée montée de manière mobile sur la paroi extérieure (4) de la portière et des éléments de transmission (10), la zone d'extrémité (18) de l'entretoise de rigidification (15) étant fixée dans la zone à mi-hauteur du côté frontal (6), qui descend de l'appui de fenêtre (12) jusqu'au côté inférieur (16) de la portière (1),
portière **caractérisée en ce que**
l'autre zone d'extrémité (17) de l'entretoise de rigidification (15) est fixée dans la zone du milieu de l'appui de fenêtre (12).

2. Portière selon la revendication 1,
**caractérisée en ce que**
l'appui de fenêtre (12) est renforcé par une traverse (13) sensiblement horizontale, reliée à la portière (1) et qui présente dans le volume intérieur (3) de la portière, une partie de paroi (14) à laquelle est fixée l'extrémité de l'entretoise de rigidification (15) tournée vers l'appui de fenêtre (12).

3. Portière selon la revendication 1 ou 2,
**caractérisée en ce que**
les zones d'extrémité de l'entretoise de renforcement sont constituées par des pattes (17, 18) en saillie dans la direction longitudinale, et qui sont fixées de manière amovible ou solidaire à la portière (1) et/ou le cas échéant la traverse (13).

4. Portière selon la revendication 1 à 3,
**caractérisée en ce que**
la zone d'extrémité de l'entretoise de renforcement (15), tournée vers le côté frontal (6) est formée par une patte (18) repliée pratiquement perpendiculairement à la direction longitudinale de l'entretoise de renforcement (15), cette patte étant reliée de manière amovible ou solidaire à la face intérieure du côté frontal (6).

5. Portière selon la revendication 1 à 4,
**caractérisée en ce que**
l'entretoise de renforcement (15) est appliquée contre la paroi extérieure (4) de la portière ou n'en est distante que d'une faible distance.

6. Portière selon la revendication 1 à 5,
**caractérisée en ce que**
l'entretoise de renforcement (15) a une section ouverte ou fermée sur une partie importante de son extension longitudinale.

7. Portière selon la revendication 1 à 6,
**caractérisée en ce que**
l'entretoise de renforcement (15) est formée par au moins un tube de section quelconque ou par au moins une pièce emboutie et/ou un profil avec des arêtes.

8. Portière selon la revendication 1 à 7,
**caractérisée en ce que**
la poignée de portière (9) est au voisinage immédiat de la serrure (7).

9. Portière selon la revendication 1 à 8,
**caractérisée en ce que**
la nervure de renforcement (15) se trouve au voisinage de la poignée (9) et/ou de la serrure (7).

10. Portière selon les revendications 8 et 9,
**caractérisée en ce que**
la serrure (7) ou en plus la poignée (9) se trouve, lorsqu'on regarde la portière (1), dans la zone sensiblement triangulaire (21) délimitée en haut par l'appui de fenêtre (12), à l'avant ou à l'arrière par une verticale et à l'avant ou à l'arrière en bas par la nervure de renforcement (15), inclinée et à l'arrière ou à l'avant par la paroi frontale de la portière (1), verticale ou droite ou courbe, ou ayant un plis vers l'avant ou vers l'arrière et le bas.
